# EUROPÄISCHE PATENTANMELDUNG

(11) **EP 4 617 535 A1**
(43) Veröffentlichungstag der Anmeldung: **17.09.2025**
(21) Anmeldenummer: 25161587.8
(22) Anmeldetag: 04.03.2025
(51) Int. Cl.: F16K 11/00, E03C 1/042, F16K 31/00, G05D 23/185

(54) **KUNSTSTOFFWASSERFÜHRUNG FÜR EINE MISCHARMATUR, MISCHARMATUR MIT EINER KUNSTSTOFFWASSERFÜHRUNG UND VERFAHREN ZUR HERSTELLUNG EINER KUNSTSTOFFWASSERFÜHRUNG**

(30) Priorität: 15.03.2024 DE 102024107543
(71) Anmelder: Grohe AG, 58675 Hemer (DE)
(72) Erfinder: Voeller, Martin, 58675 Hemer (DE); Luig, Frank-Thomas, 58708 Menden (DE); Becker, Melanie, 58675 Hemer (DE)

(57) **Zusammenfassung**

Kunststoffwasserführung (1) für eine Mischarmatur, zumindest aufweisend:
- ein Außenrohr (3), das sich entlang einer Längsachse (4) erstreckt;
- ein Innenrohr (5), das sich entlang der Längsachse (4) erstreckt und zumindest teilweise in dem Außenrohr (3) angeordnet ist, sodass zwischen dem Innenrohr (5) und dem Außenrohr (3) zumindest ein Warmwasserkanal (6) ausgebildet ist; und
- zumindest einen Mischwasserabgang (8), der sich durch das Innenrohr (5) und das Außenrohr (3) erstreckt;
wobei die Kunststoffwasserführung (1) einstückig ausgebildet ist.
Zudem wird auch eine Mischarmatur mit einer solchen Kunststoffwasserführung (1) und ein Verfahren zur Herstellung der Kunststoffwasserführung (1) vorgeschlagen.

## Beschreibung

Die vorliegende Erfindung betrifft eine Kunststoffwasserführung für eine Mischarmatur, eine Mischarmatur mit der Kunststoffwasserführung und ein Verfahren zur Herstellung der Kunststoffwasserführung. Mittels der Mischarmatur ist Mischwasser mit einer gewünschten Mischwassertemperatur insbesondere an Waschbecken, Spülbecken, Duschen und/oder Badewannen bereitstellbar.

Mischarmaturen weisen regelmäßig ein Armaturengehäuse auf, in dem komplexe Flüssigkeitskanäle für Warmwasser und Kaltwasser ausgebildet sind. Über die Flüssigkeitskanäle sind das Warmwasser und Kaltwasser einem Mischventil, beispielsweise nach Art eines Thermostatmischers, zuführbar. Beim Durchströmen der Flüssigkeitskanäle kommt das Warmwasser und/oder Kaltwasser zumindest in Teilbereichen mit dem Armaturengehäuse in Kontakt, sodass das Armaturengehäuse aus einem für Trinkwasser geeignetem Material, wie zum Beispiel Messing, bestehen muss. Die Herstellung derartiger Armaturengehäuse ist jedoch mit hohen Kosten verbunden.

Daher sind Mischarmaturen bekannt, in denen die Flüssigkeitskanäle durch Kunststoffwasserführungen ausgebildet sind. Die Kunststoffwasserführungen weisen einen hohen Bauraumbedarf auf, der einen großen Außendurchmesser des Armaturengehäuses zur Folge hat. Nach Mischarmaturen in einem Stabdesign mit einem geringen Außendurchmesser besteht jedoch eine hohe Nachfrage.

Aufgabe der Erfindung ist es daher, die mit Bezug auf den Stand der Technik geschilderten Probleme zumindest teilweise zu lösen und insbesondere eine Kunststoffwasserführung anzugeben, die einen geringen Außendurchmesser eines Armaturengehäuses einer Mischarmatur ermöglicht. Zudem soll eine Mischarmatur angegeben werden, deren Kunststoffwasserführung einen geringen Außendurchmesser eines Armaturengehäuses der Mischarmatur ermöglicht. Weiterhin soll ein Verfahren zur Herstellung einer Kunststoffwasserführung angegeben werden, das eine Ausgestaltung eines Armaturengehäuses einer Mischarmatur mit einem geringen Außendurchmesser ermöglicht.

Diese Aufgaben werden gelöst mit einer Kunststoffwasserführung, einer Mischarmatur und einem Verfahren gemäß den Merkmalen der unabhängigen Patentansprüche. Weitere vorteilhafte Ausgestaltungen der Erfindung sind in den abhängigen Patentansprüchen angegeben. Es ist darauf hinzuweisen, dass die in den abhängigen Patentansprüchen einzeln aufgeführten Merkmale in beliebiger, technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Kunststoffwasserführung für eine Mischarmatur bei, die zumindest Folgendes aufweist:
- ein Außenrohr, das sich entlang einer Längsachse erstreckt;
- ein Innenrohr, das sich entlang der Längsachse erstreckt und zumindest teilweise in dem Außenrohr angeordnet ist, sodass zwischen dem Innenrohr und dem Außenrohr zumindest ein Warmwasserkanal ausgebildet ist; und
- zumindest einen Mischwasserabgang, der sich durch das Innenrohr und das Außenrohr erstreckt;
wobei die Kunststoffwasserführung einstückig ausgebildet ist.

Die Mischarmatur kann beispielsweise als Thermostatmischarmatur, Auf-Putz-Brausethermostatarmatur, Auf-Putz-Wannenthermostatarmatur, Auf-Putz-Duschsystem (mit oder ohne (Kopf-)Brause) und/oder Auf-Putz-Wannensystem (mit oder ohne (Kopf-)Brause) ausgebildet sein. Die Mischarmatur kann insbesondere der bedarfsgerechten Bereitstellung eines Mischwassers an einem Waschbecken, einem Spülbecken, einer Dusche und/oder einer Badewanne dienen. Hierzu kann an die Mischarmatur beispielsweise über einen flexiblen Schlauch und/oder eine Rohrleitung an eine Brause, beispielsweise nach Art einer Handbrause oder Kopfbrause, anschließbar sein.

Die Mischarmatur kann ein Mischventil, beispielsweise nach Art eines Thermostatmischers bzw. einer Thermostatmischkartusche, aufweisen. Durch das Mischventil kann Warmwasser mit einer Warmwassertemperatur und Kaltwasser mit einer Kaltwassertemperatur zu einem Mischwasser mit einer gewünschten Mischwassertemperatur mischbar sein. Die Mischwassertemperatur ist insbesondere durch ein Regelelement, beispielsweise in Form eines Dehnstoffelements, des Mischventils regelbar. Die Warmwassertemperatur beträgt insbesondere maximal 90 °C, bevorzugt 25 °C bis 90 °C, besonders bevorzugt 55 °C bis 65 °C und/oder die Kaltwassertemperatur insbesondere maximal 25 °C (Celsius), bevorzugt 1 °C bis 25 °C, besonders bevorzugt 5 °C bis 20 °C. Das Mischventil ist insbesondere in einem Armaturengehäuse der Mischarmatur angeordnet, mit dem die Mischarmatur an einem Träger, wie zum Beispiel einer (Gebäude-)Wand, befestigbar ist. Das Mischventil kann sich über ein erstes längsseitiges Ende des Außenrohrs zumindest teilweise in die Kunststoffwasserführung erstrecken.

Die Mischarmatur kann ein Ventil zur Steuerung einer Abgabe des Mischwassers über den zumindest einen Mischwasserabgang der Kunststoffwasserführung aufweisen.

Das Armaturengehäuse kann zumindest teilweise oder vollständig aus einer Zinklegierung bestehen. Bei der Zinklegierung handelt es sich insbesondere um eine Metalllegierung, deren Hauptbestandteil bzw. Basismetall Zink (Zn) ist. Dies kann insbesondere bedeuten, dass Zink im Vergleich zu den übrigen Legierungsbestandteilen der Zinklegierung den größten Massenanteil aufweist. Die Zinklegierung kann Zink mit einem Massenanteil von mehr als 80 % aufweisen. Insbesondere kann die Zinklegierung Zink mit einem Massenanteil von mehr als 90 % oder 95 % aufweisen. Die Zinklegierung bzw. das Zink weist im Vergleich zu Kupfer oder einer Kupferlegierung, wie zum Beispiel Messing, eine unterschiedliche Kristallstruktur auf, nämlich hexagonal statt kubisch-flächenzentriert. Bei der Zinklegierung kann es sich insbesondere um eine sogenannte Zamak-Legierung handeln. Als weitere Legierungsbestandteile kann die Zinklegierung beispielsweise zumindest Aluminium (Al), Magnesium (Mg) und/oder Kupfer (Cu) umfassen. Insbesondere kann die Zinklegierung folgende Massenanteile von Legierungsbestandteilen umfassen:
a) 3,8 - 4,2 % Al, 0,035 - 0,06 % Mg, Rest (insbesondere) Zn (Zamak-Legierung ZL0400),
b) 3,8 - 4,2 % Al, 0,7 - 1,1 % Cu, 0,035 - 0,06 % Mg, Rest (insbesondere) Zn (Zamak-Legierung ZL0410) oder
c) 3,8 - 4,2 % Al, 2,7 - 3,3 % Cu, 0,035 - 0,06 % Mg, Rest (insbesondere) Zn (Zamak-Legierung ZL0430).

Das Armaturengehäuse kann durch ein Zinkdruckgussverfahren hergestellt sein. Bei dem Zinkdruckgussverfahren wird insbesondere eine flüssige Schmelze der Zinklegierung unter Druck in eine Druckgussform gedrückt. Nach einem Erstarren der Schmelze kann das Armaturengehäuse entformt und ggf. mechanisch bearbeitet werden. Bei dem Armaturengehäuse handelt es sich daher insbesondere um ein Zinkdruckgussteil.

Das Armaturengehäuse kann einen Warmwasserzulauf für das Warmwasser und einen Kaltwasserzulauf für das Kaltwasser aufweisen. An den Warmwasserzulauf ist insbesondere eine Warmwasserzuführleitung bzw. ein Warmwasserzuführrohr für das Warmwasser und/oder an den Kaltwasserzulauf insbesondere eine Kaltwasserzuführleitung bzw. ein Kaltwasserzuführrohr für das Kaltwasser anschließbar.

Das Warmwasser ist dem Mischventil über eine Kunststoffwasserführung insbesondere ohne Kontakt zu dem Armaturengehäuse zuführbar. Die Kunststoffwasserführung ist bei einer Herstellung bzw. einer Montage der Mischarmatur insbesondere in einem Montageraum des Armaturengehäuses anordenbar bzw. in den Montageraum einsteckbar. Der Montageraum kann beispielsweise (im Wesentlichen) zylinderförmig ausgebildet sein und/oder sich entlang einer Gehäuselängsachse des Armaturengehäuses erstrecken. Die Gehäuselängsachse kann eine Zentrumsachse des Montageraums darstellen.

Das Kaltwasser ist von dem zweiten Zulauf über zumindest einen Kaltwasserkanal dem Mischventil zuführbar. Der zumindest eine Kaltwasserkanal ist insbesondere in dem Montageraum des Armaturengehäuses ausgebildet. Weiterhin können der zumindest eine Warmwasserkanal und der zumindest eine Kaltwasserkanal derart ausgebildet sein, dass sie sich innerhalb des Armaturengehäuses nicht kreuzen. Der zumindest eine Kaltwasserkanal kann zumindest teilweise ringförmig ausgebildet sein. Der zumindest eine Kaltwasserkanal kann sich zumindest teilweise um das Mischventil erstrecken. Dies kann insbesondere bedeuten, dass das Mischventil den Kaltwasserkanal, insbesondere innen, begrenzt.

Die Kunststoffwasserführung erstreckt sich entlang einer, insbesondere geraden, Längsachse. Die Kunststoffwasserführung weist ein Außenrohr auf, das sich entlang der Längsachse erstreckt. Das Außenrohr kann zumindest teilweise oder vollständig aus Kunststoff bestehen. Das Außenrohr kann sich entlang der Längsachse von einem ersten längsseitigen Ende zu einem zweiten längsseitigen Ende erstrecken. Das Außenrohr kann (insbesondere parallel zu der Längsachse) eine Außenrohrlänge von beispielsweise 100 mm [Millimeter] bis 300 mm aufweisen.

Die Kunststoffwasserführung weist ein Innenrohr auf, das sich entlang der Längsachse erstreckt und zumindest teilweise oder vollständig in dem Außenrohr angeordnet ist. Das Innenrohr kann zumindest teilweise oder vollständig aus Kunststoff bestehen. Das Innenrohr kann sich entlang der Längsachse von einem dritten längsseitigen Ende zu einem vierten längsseitigen Ende erstrecken. Das Innenrohr kann (insbesondere parallel zu der Längsachse) eine Innenrohrlänge von beispielsweise 100 mm bis 300 mm, bevorzugt 50 mm bis 280 mm, aufweisen. Die Innenrohrlänge des Innenrohrs kann kürzer sein als die Außenrohrlänge des Außenrohrs.

Zwischen dem Innenrohr und dem Außenrohr ist zumindest ein Warmwasserkanal ausgebildet. Das Außenrohr kann zumindest einen Warmwassereinlass aufweisen, über den das Warmwasser dem zumindest einen Warmwasserkanal zuführbar ist. Der zumindest eine Warmwassereinlass kann nach Art einer Bohrung bzw. einer Öffnung ausgebildet sein und/oder sich zumindest teilweise orthogonal zu der Längsachse von einer ersten äußeren Umfangsfläche des Außenrohrs zu einer ersten inneren Umfangsfläche des Außenrohrs erstrecken. Über den zumindest einen Warmwasserkanal ist das Warmwasser, insbesondere von dem Warmwasserzulauf, ohne Kontakt zu dem Armaturengehäuse dem Mischventil zuführbar. Hierzu kann sich der zumindest eine Warmwasserkanal in dem Armaturengehäuse zumindest teilweise von dem Warmwasserzulauf zu dem Mischventil erstrecken. Der zumindest eine Warmwasserkanal kann sich zumindest teilweise oder vollständig parallel zu der Längsachse erstrecken und/oder zumindest teilweise ringförmig ausgebildet sein. Der zumindest eine Warmwasserkanal kann durch die erste innere Umfangsfläche des Außenrohrs und einer zweiten äußeren Umfangsfläche des Innenrohrs begrenzt werden und/oder sich zwischen der ersten inneren Umfangsfläche des Außenrohrs und der zweiten äußeren Umfangsfläche des Innenrohrs erstrecken.

Die Kunststoffwasserführung weist zumindest einen Mischwasserabgang für das Mischwasser auf, der sich durch das Innenrohr und das Außenrohr erstreckt. Der zumindest eine Mischwasserabgang kann nach Art einer Bohrung und/oder eines Flüssigkeitskanals ausgebildet sein. Der zumindest eine Mischwasserabgang kann zumindest teilweise durch einen ringförmigen Ansatz gebildet sein. Der zumindest eine ringförmige Ansatz kann das Innenrohr mit dem Außenrohr verbinden. Der zumindest eine Mischwasserabgang und/oder der zumindest eine ringförmige Ansatz können (im Wesentlichen) einen geraden Verlauf aufweisen. Der zumindest eine Mischwasserabgang und/oder der zumindest eine ringförmige Ansatz können einen (Innen-)Durchmesser von beispielsweise 5 mm bis 15 mm aufweisen. Der zumindest eine Mischwasserabgang kann sich von der zweiten inneren Umfangsfläche des Innenrohrs zu der ersten äußeren Umfangsfläche des Außenrohrs erstrecken. Der zumindest eine ringförmige Ansatz kann sich von der zweiten äußeren Umfangsfläche des Innenrohrs zu der ersten inneren Umfangsfläche des Außenrohrs erstrecken. Der zumindest eine Mischwasserabgang und/oder der zumindest eine ringförmige Ansatz können sich zumindest teilweise durch den zumindest einen Warmwasserkanal erstrecken. Dies kann beispielsweise bedeuten, dass der zumindest eine Mischwasserabgang und der zumindest eine Warmwasserkanal sich kreuzen.

Über den zumindest einen Mischwasserabgang kann das Mischwasser zumindest einem Mischwasserablauf der Mischarmatur und/oder zumindest einer Auslauföffnung der Mischarmatur zuführbar sein. An den zumindest einen Mischwasserablauf kann beispielsweise der flexible Schlauch und/oder die Rohrleitung anschließbar sein, über die das Mischwasser zum Beispiel zumindest einer Brause zuführbar sein kann. Hierzu kann der zumindest eine Mischwasserablauf ein Gewinde aufweisen. Die zumindest eine Auslauföffnung der Mischarmatur kann beispielsweise einen Luftsprudler, zumindest eine Düse und/oder zumindest einen Strahlbildner umfassen. Über die zumindest eine Auslauföffnung der Mischarmatur kann das Mischwasser beispielsweise an eine Umgebung der Mischarmatur abgebbar sein. Der zumindest eine Mischwasserabgang kann einen Durchmesser von beispielsweise 5 mm bis 25 mm aufweisen.

Die Kunststoffwasserführung ist einstückig ausgebildet bzw. einstückig hergestellt. Die Kunststoffwasserführung kann als (einstückiges) Kunststoffspritzgussteil ausgebildet sein. Insbesondere ist das Außenrohr, das Innenrohr und der zumindest eine Mischwasserabgang (bzw. der zumindest eine ringförmige Ansatz des zumindest einen Mischwasserabgangs) einstückig ausgebildet. Dies bedeutet insbesondere, dass die Kunststoffwasserführung nicht aus mehreren Komponenten gebildet ist, die, beispielsweise über eine Steckverbindung, eine Klemmverbindung, eine Schraubverbindung, eine Klebeverbindung, eine Schweißverbindung und/oder durch Overmolding, miteinander verbunden sind. Insbesondere sind das Außenrohr, das Innenrohr und der zumindest eine Mischwasserabgang (bzw. der zumindest eine ringförmige Ansatz des zumindest einen Mischwasserabgangs) keine einzelnen Komponenten, die, beispielsweise über eine Steckverbindung, eine Klemmverbindung, eine Schraubverbindung, eine Klebeverbindung, eine Schweißverbindung und/oder durch Overmolding, miteinander verbunden sind.

Die einstückig ausgebildete Kunststoffwasserführung ermöglicht stabförmige Armaturengehäuse mit einem geringen Außendurchmesser, beispielsweise von maximal 40 mm, herzustellen. Zudem sind keine Nippel mit aufwändigen O-Ringabdichtungen erforderlich. Zudem kann eine Wandstärke des zumindest einen ringförmigen Ansatzes gering sein. Die Wandstärke kann beispielsweise 1 mm bis 5 mm betragen.

Das Außenrohr kann einen ersten Außenrohrabschnitt mit einem ersten Außenrohraußendurchmesser und einen zweiten Außenrohrabschnitt mit einem zweiten Außenrohraußendurchmesser aufweisen, wobei der erste Außenrohraußendurchmesser kleiner als der zweite Außenrohraußendurchmesser ist. Der erste Außenrohraußendurchmesser kann beispielsweise maximal 58 mm, bevorzugt 15 mm bis 58 mm, besonders bevorzugt 15 mm bis 36 mm, aufweisen. Der zweite Außenrohraußendurchmesser kann beispielsweise maximal 60 mm, bevorzugt 20 mm bis 60 mm, besonders bevorzugt 20 mm bis 38 mm, aufweisen. Der erste Außenrohraußendurchmesser und der zweite Außenrohraußendurchmesser bemessen sich insbesondere orthogonal zu der Längsachse. Der erste Außenrohrabschnitt kann (insbesondere parallel zu der Längsachse) eine erste Außenrohrabschnittslänge von beispielsweise 90 mm bis 290 mm aufweisen. Der zweite Außenrohrabschnitt kann (insbesondere parallel zu der Längsachse) eine zweite Außenrohrabschnittslänge von beispielsweise 10 mm bis 210 mm aufweisen.

Das Außenrohr kann einen ersten Außenrohrabschnitt mit einem ersten Außenrohrinnendurchmesser und einen zweiten Außenrohrabschnitt mit einem zweiten Außenrohrinnendurchmesser aufweisen, wobei der erste Außenrohrinnendurchmesser kleiner als der zweite Außenrohrinnendurchmesser ist. Der erste Außenrohrinnendurchmesser kann beispielsweise maximal 56 mm, bevorzugt 10 mm bis 56 mm, besonders bevorzugt 10 mm bis 34 mm, aufweisen. Der zweite Außenrohrinnendurchmesser kann beispielsweise maximal 58 mm, bevorzugt 18 mm bis 58 mm, besonders bevorzugt 18 mm bis 36 mm, aufweisen. Der erste Außenrohrinnendurchmesser und der zweite Außenrohrinnendurchmesser bemessen sich insbesondere orthogonal zu der Längsachse.

Das Innenrohr kann einen ersten Innenrohrabschnitt mit einem ersten Innenrohraußendurchmesser und einen zweiten Innenrohrabschnitt mit einem zweiten Innenrohraußendurchmesser aufweisen, wobei der erste Innenrohraußendurchmesser kleiner als der zweite Innenrohraußendurchmesser ist. Der erste Innenrohraußendurchmesser kann beispielsweise maximal 50 mm, bevorzugt 6 mm bis 50 mm, besonders bevorzugt 6 mm bis 30 mm, aufweisen. Der zweite Innenrohraußendurchmesser kann beispielsweise maximal 54 mm, bevorzugt 8 mm bis 54 mm, besonders bevorzugt 8 mm bis 32 mm, aufweisen. Der erste Innenrohrabschnitt kann (insbesondere parallel zu der Längsachse) eine erste Innenrohrabschnittslänge von beispielsweise 5 mm bis 50 mm aufweisen. Der zweite Innenrohrabschnitt kann (insbesondere parallel zu der Längsachse) eine zweite Innenrohrabschnittslänge von beispielsweise 45 mm bis 250 mm aufweisen.

Das Innenrohr kann einen ersten Innenrohrabschnitt mit einem ersten Innenrohrinnendurchmesser und einen zweiten Innenrohrabschnitt mit einem zweiten Innenrohrinnendurchmesser aufweisen, wobei der erste Innenrohrinnendurchmesser kleiner als der zweite Innenrohrinnendurchmesser ist. Der erste Innenrohrinnendurchmesser kann beispielsweise maximal 48 mm, bevorzugt 4 mm bis 48 mm, besonders bevorzugt 4 mm bis 28 mm, aufweisen. Der zweite Innenrohrinnendurchmesser kann beispielsweise maximal 52 mm, bevorzugt 6 mm bis 52 mm, besonders bevorzugt 6 mm bis 30 mm, aufweisen.

Der zumindest eine Mischwasserabgang kann orthogonal zu der Längsachse verlaufen. Der zumindest eine Mischwasserabgang und/oder der zumindest eine ringförmige Ansatz können sich orthogonal zu der Längsachse erstrecken.

Der zumindest eine Mischwasserabgang kann eine Wandstärke von maximal 5 mm aufweisen. Insbesondere kann der zumindest eine ringförmige Ansatz eine Wandstärke von maximal 5 mm aufweisen.

Die Kunststoffwasserführung kann Folgendes aufweisen:
- einen ersten Mischwasserabgang, der sich durch das Innenrohr und das Außenrohr erstreckt; und
- einen zweiten Mischwasserabgang, der sich durch das Innenrohr und das Außenrohr erstreckt, wobei der erste Mischwasserabgang und der zweite Mischwasserabgang um die Längsachse mit einem Winkel von 100° bis 140° versetzt zueinander ausgebildet sind.

Der erste Mischwasserabgang und der zweite Mischwasserabgang sind um die Längsachse mit einem Winkel von 100° bis 140°, bevorzugt 110° bis 130°, besonders bevorzugt (im Wesentlichen) 120°, versetzt zueinander angeordnet. Dies ermöglicht insbesondere eine Verwendung der (gleichen) Kunststoffwasserführung in unterschiedlichen Mischarmaturen, beispielsweise indem die Kunststoffwasserführung in dem Armaturengehäuse der Mischarmaturen und/oder um die Längsachse (lediglich) um einen Drehwinkel gedreht wird. Der Drehwinkel kann beispielsweise 110° bis 130° betragen.

Der erste Mischwasserabgang und der zweite Mischwasserabgang können in einer gemeinsamen Ebene ausgebildet sein. Dies kann insbesondere bedeuten, dass der erste Mischwasserabgang und der zweite Mischwasserabgang entlang der Längsachse nicht versetzt zueinander ausgebildet sind. Insbesondere können eine erste Zentrumsachse des ersten Mischwasserabgangs und eine zweite Zentrumsachse des zweiten Mischwasserabgangs in der gemeinsamen Ebene liegen. Die Ebene kann insbesondere senkrecht zu der Längsachse verlaufen.

Das Innenrohr und/oder das Außenrohr können einen ersten ringförmigen Ansatz zur zumindest teilweisen Ausbildung des ersten Mischwasserabgangs aufweisen. Das Innenrohr und/oder das Außenrohr können einen zweiten ringförmigen Ansatz zur zumindest teilweisen Ausbildung des zweiten Mischwasserabgangs aufweisen. Der erste ringförmige Ansatz und/oder der zweite ringförmige Ansatz können rohrförmig ausgebildet sein. Der erste ringförmige Ansatz und/oder der zweite ringförmige Ansatz können an der ersten inneren Umfangsfläche des Außenrohrs und/oder der zweiten äußeren Umfangsfläche des Innenrohrs ausgebildet sein.

Der erste ringförmige Ansatz und/oder der zweite ringförmige Ansatz können sich durch den zumindest einen Warmwasserkanal erstrecken.

Einem weiteren Aspekt folgend wird auch eine Mischarmatur angegeben, die zumindest Folgendes aufweist:
- ein Armaturengehäuse mit einem Warmwasserzulauf für Warmwasser und einem Kaltwasserzulauf für Kaltwasser;
- ein Mischventil zum Mischen des Warmwassers und des Kaltwassers zu einem Mischwasser; und
- eine hier beschriebene Kunststoffwasserführung, wobei das Warmwasser dem Mischventil durch die Kunststoffwasserführung ohne Kontakt zu dem Armaturengehäuse zuführbar ist.

Für weitere Einzelheiten zu der Mischarmatur wird vollumfänglich auf die Beschreibung der Kunststoffwasserführung verwiesen.

Einem noch weiteren Aspekt folgend wird auch ein Verfahren zur Herstellung einer hier beschriebenen Kunststoffwasserführung vorgeschlagen, bei dem die Kunststoffwasserführung durch Spritzgießen hergestellt wird.

Insbesondere wird die Kunststoffwasserführung bei dem Verfahren durch Kunststoffspritzgießen hergestellt. Die Kunststoffwasserführung ist derart ausgebildet, dass diese beim Spritzgießen einfach entformbar ist.

Für weitere Einzelheiten zu dem Verfahren wird vollumfänglich auf die Beschreibung der Kunststoffwasserführung verwiesen.

Die Erfindung sowie das technische Umfeld werden nachfolgend anhand der Figuren näher erläutert. Es ist darauf hinzuweisen, dass die Figuren eine bevorzugte Variante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine Mischarmatur in einem ersten Längsschnitt;
- Fig. 2:: eine Mischarmatur einem zweiten Längsschnitt;
- Fig. 3:: eine Kunststoffwasserführung der Mischarmatur in einem Längsschnitt; und
- Fig. 4:: die Mischarmatur in einem Querschnitt.

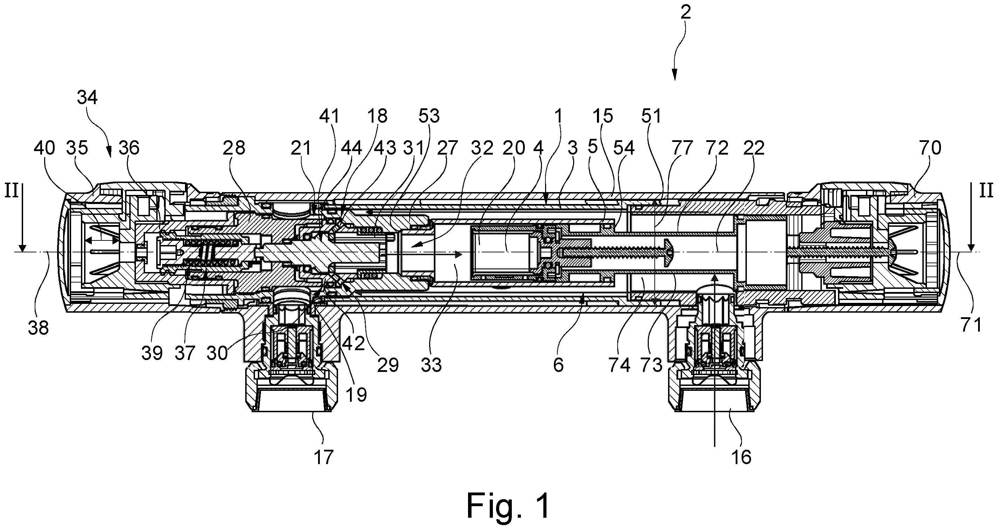

Fig. 1 zeigt eine Mischarmatur 2 in einem ersten Längsschnitt. Die Mischarmatur 2 umfasst ein Armaturengehäuse 15 mit einem Warmwasserzulauf 16 für Warmwasser und einem Kaltwasserzulauf 17 für Kaltwasser. In dem Armaturengehäuse 15 ist ein Mischventil 18 nach Art eines Thermostatmischers bzw. einer Thermostatmischkartusche angeordnet. Der Warmwasserzulauf 16 ist über einen (hier ringförmigen) Warmwasserkanal 6 und der Kaltwasserzulauf 17 über einen (hier ringförmigen) Kaltwasserkanal 21 mit dem Mischventil 18 verbunden, sodass das Warmwasser dem Mischventil 18 über den Warmwasserkanal 6 und das Kaltwasser dem Mischventil 18 über den Kaltwasserkanal 21 zuführbar sind. Die Strömungsrichtungen des Warmwassers in dem Warmwasserkanal 6 und des Kaltwassers in dem Kaltwasserkanal 21 sind in der Fig. 1 durch entsprechende Pfeile dargestellt. Der Kaltwasserkanal 21 erstreckt sich ringförmig um das Mischventil 18. Das Mischventil 18 ist konzentrisch zu einer Gehäuselängsachse 22 des Armaturengehäuses 15 angeordnet.

In dem Armaturengehäuse 15 ist eine Kunststoffwasserführung 1 mit einem Außenrohr 3 und einem Innenrohr 5 angeordnet. Die Kunststoffwasserführung 1 bzw. das Außenrohr 3 und das Innenrohr 5 erstrecken sich entlang einer, insbesondere geraden, Längsachse 4, die parallel bzw. koaxial zu der Gehäuselängsachse 22 des Armaturengehäuses 15 verläuft. Das Innenrohr 5 ist in dem Außenrohr 3 angeordnet, sodass zwischen dem Innenrohr 5 und dem Außenrohr 3 der Warmwasserkanal 6 ausgebildet ist. Der Warmwasserkanal 6 verläuft (im Wesentlichen) parallel zu der Längsachse 4 der Kunststoffwasserführung 1 und der Gehäuselängsachse 22 des Armaturengehäuses 15. Das Außenrohr 3 und das Innenrohr 5 verlaufen koaxial zueinander.

Durch das Mischventil 18 sind das Warmwasser und das Kaltwasser zu einem Mischwasser mit einer Mischwassertemperatur mischbar. Das Mischventil 18 weist ein Kartuschengehäuse 27 mit einem Kartuschenkopfstück 28 auf, das (im Wesentlichen) rohrförmig ausgebildet ist und sich entlang der Gehäuselängsachse 22 des Mischventils 18 bzw. des Armaturengehäuses 15 erstreckt. In dem Kartuschenkopfstück 28 ist zumindest ein erster Einlass 29 für das Warmwasser und zumindest ein zweiter Einlass 30 für das Kaltwasser ausgebildet. Die hier gezeigte Variante des Mischventils 18 weist eine Mehrzahl von ersten Einlässen 29 und zweiten Einlässen 30 auf, die in einer Umfangsrichtung um die Gehäuselängsachse 22 in dem Kartuschenkopfstück 28 verteilt angeordnet sind. Über die ersten Einlässe 29 ist das Warmwasser und über die die zweiten Einlässe 30 das Kaltwasser in eine Mischkammer 31 des Mischventils 18 führbar. Somit ist die Mischkammer 31 den ersten Einlässen 29 und zweiten Einlässen 30 in einer Strömungsrichtung des Warmwassers und des Kaltwassers nachgeordnet. In der Mischkammer 31 sind das Warmwasser und das Kaltwasser zu dem Mischwasser mischbar. Der Mischkammer 31 ist in Strömungsrichtung des Mischwassers ein Mischwasserauslass 32 nachgeordnet, durch den das Mischwasser das Mischventil 18 verlassen kann. Das Mischventil 18 erstreckt sich mit dem Mischwasserauslass 32 über ein erstes längsseitiges Ende 19 des Außenrohrs 3 in die Kunststoffwasserführung 1 bzw. in das Außenrohr 3. Von dem Mischwasserauslass 32 ist das Mischwasser über einen Mischwasserkanal 33 der Kunststoffwasserführung 1 einem Ventil 20 zuführbar, mit dem eine Abgabe des Mischwassers aus der Mischarmatur 2 steuerbar ist. Das Ventil 20 ist über einen Ventilbetätigungsgriff 70 betätigbar, der dem Betätigungsgriff 35 gegenüberliegt. Der Ventilbetätigungsgriff 70 ist um eine zweite Drehachse 71 drehbar, die hier mit der Gehäuselängsachse 22 und Längsachse 4 fluchtet. Der Ventilbetätigungsgriff 70 ist über ein in Fig. 1 nicht dargestelltes Verbindungselement mit dem Ventil 20 verbunden. Der Mischwasserkanal 33 ist in dem Innenrohr 5 ausgebildet. Der Mischwasserkanal 33 erstreckt sich parallel bzw. koaxial zu der Gehäuselängsachse 22 des Armaturengehäuses 15 und parallel bzw. koaxial zu der Längsachse 4 der Kunststoffwasserführung 1 durch die Kunststoffwasserführung 1. Ein Strömungsverlauf des Mischwassers ist in Fig. 1 mit einem entsprechenden Pfeil dargestellt.

Die Mischarmatur 2 umfasst ein Kunststoffrohr 72, das sich durch ein zweites längsseitiges Ende 51 des Außenrohrs 3 in die Kunststoffwasserführung 1 erstreckt. Ein drittes längsseitiges Ende 53 des Innenrohrs 5 ist in dem Kartuschengehäuse 27 des Mischventils 18 angeordnet. Das Kunststoffrohr 72 erstreckt sich in ein viertes längsseitiges Ende 54 des Innenrohrs 5, sodass kein Warmwasser von dem Warmwasserzulauf 16 über das vierte längsseitige Ende 54 in das Innenrohr 5 strömen kann. Das Kunststoffrohr 72 begrenzt mit seiner Kunststoffrohraußenfläche 73 einen (hier ringförmigen) Verbindungskanal 74, der den Warmwasserzulauf 16 mit der Kunststoffwasserführung 1 verbindet, sodass das Warmwasser von dem Warmwasserzulauf 16 über das zweite längsseitige Ende 51 des Außenrohrs 3 in den Warmwasserkanal 6 strömen kann.

Die Mischwassertemperatur des Mischwassers wird durch ein Mischungsverhältnis zwischen dem Warmwasser und dem Kaltwasser bestimmt. Zur Einstellung der Mischwassertemperatur weist das Mischventil 18 ein Stellelement 34 auf. Das Stellelement 34 umfasst einen Betätigungsgriff 35, der verdrehfest mit einer Reguliermutter 36 einer Überlasteinheit 37 verbunden ist. Der Betätigungsgriff 35 ist somit mit der Reguliermutter 36 um eine erste Drehachse 38 drehbar, die hier mit der Gehäuselängsachse 22 und Längsachse 4 fluchtet. Beim Drehen des Betätigungsgriffs 35 wird eine Federhülse 39 in einer axialen Richtung 40, d. h. parallel zu der Gehäuselängsachse 22 und der Längsachse 4, verstellt. Die Bewegung der Federhülse 39 in die axiale Richtung 40 wird auf ein Regelelement 41 übertragen, das wiederum einen Regelschieber 42 in der axialen Richtung 40 bewegt. Je nach Position des Regelschiebers 42 in der axialen Richtung 40 kann der Regelschieber 42 einen ersten Regelspalt 43 für das Warmwasser und einen zweiten Regelspalt 44 für das Kaltwasser wechselweise öffnen und schließen. Je nach Position des Regelschiebers 42 wird eine entsprechende Menge des Warmwassers und Kaltwassers in das Mischventil 18 durch den ersten Regelspalt 43 und den zweiten Regelspalt 44 geleitet, woraus das Mischwasser mit einer entsprechenden Mischwassertemperatur gemischt wird. Das Regelelement 41 kann zumindest teilweise aus einem Wärmeausdehnungsmaterial bestehen. Hierdurch dehnt sich das Regelelement 41 insbesondere in der axiale Richtung 40 aus, wenn es erwärmt wird, und zieht sich insbesondere in der axialen Richtung 40 zusammen, wenn es abgekühlt wird. Dadurch kann das Regelelement 41 die Mischwassertemperatur des Mischwassers (im Wesentlichen) konstant halten. Strömt beispielsweise zu viel des Warmwassers und/oder zu wenig des Kaltwassers in das Mischventil 18, erwärmt und dehnt sich das Regelelement 41 aus, wodurch es den Regelschieber 42 in der axialen Richtung 40 in Richtung des Mischwasserauslasses 21 verstellt, sodass der erste Regelspalt 43 verkleinert und der zweite Regelspalt 44 vergrößert werden. Somit strömt weniger Warmwasser und mehr Kaltwasser in die Mischkammer 31. Strömt beispielsweise zu viel Kaltwasser und/oder zu wenig Warmwasser in das Mischventil 18, zieht sich das Regelelement 41 zusammen, wodurch es den Regelschieber 42 vom Mischwasserauslass 32 wegbewegt, sodass der erste Regelspalt 43 vergrößert und der zweite Regelspalt 44 verkleinert wird. Somit strömt mehr Warmwasser und weniger Kaltwasser in die Mischkammer 31.

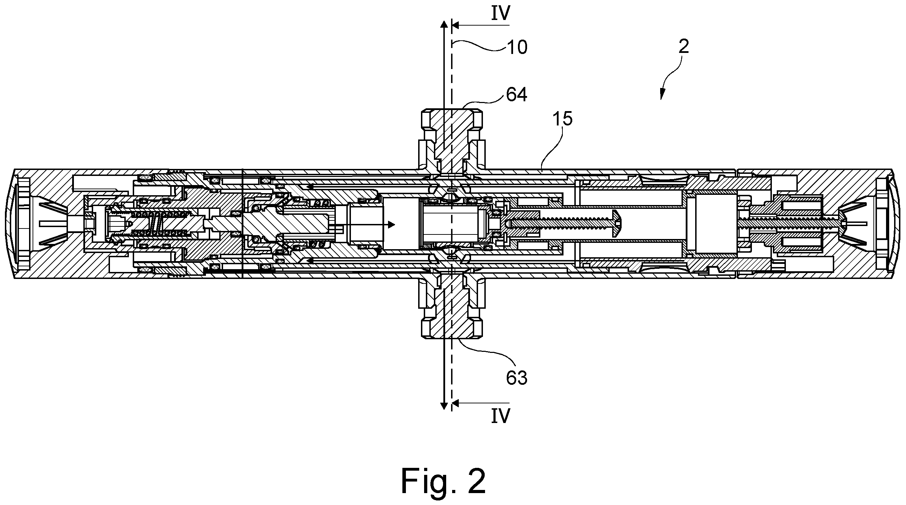

Fig. 2 zeigt die Mischarmatur 2 in einem zweiten Längsschnitt entlang der in Fig. 1 gezeigten Schnittlinie II-II. Zu erkennen ist in Fig. 2 insbesondere, dass die Mischarmatur 2 bzw. das Armaturengehäuse 15 einen ersten Mischwasserablauf 63 für das Mischwasser und einen zweiten Mischwasserablauf 64 für das Mischwasser aufweist.

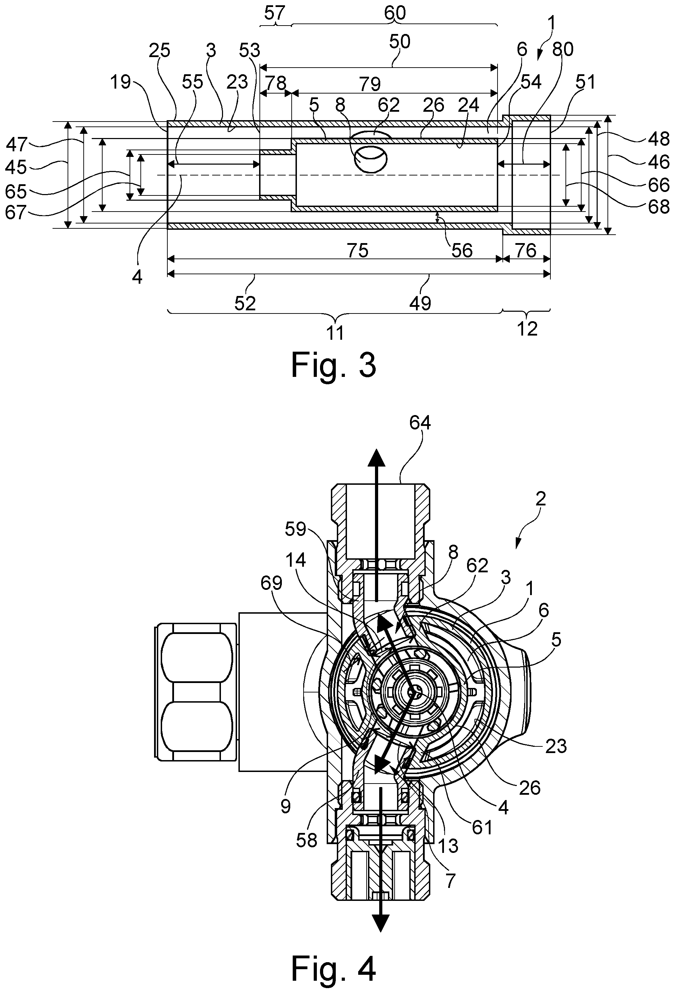

Fig. 3 zeigt die Kunststoffwasserführung 1 der in Fig. 1 und 2 gezeigten Mischarmatur 2 in einem Längsschnitt. Das Außenrohr 3 weist eine erste innere Umfangsfläche 23 und eine erste äußere Umfangsfläche 25 auf. Das Innenrohr 5 weist eine zweite innere Umfangsfläche 24 und eine zweite äußere Umfangsfläche 26 auf. Das Außenrohr 3 weist einen ersten Außenrohrabschnitt 11 und einen zweiten Außenrohrabschnitt 12 auf. Der erste Außenrohrabschnitt 11 erstreckt sich von dem ersten längsseitigen Ende 19 des Außenrohrs 3 bis zu dem zweiten Außenrohrabschnitt 12. Der erste Außenrohrabschnitt 11 weist parallel zu der Längsachse 4 eine erste Außenrohrabschnittslänge 75 auf. Der erste Außenrohrabschnitt 11 weist einen ersten Außenrohraußendurchmesser 45 und einen ersten Außenrohrinnendurchmesser 47 auf. Der zweite Außenrohrabschnitt 12 erstreckt sich von dem ersten Außenrohrabschnitt 11 bis zu dem zweiten längsseitigen Ende 51 des Außenrohrs 3. Der zweite Außenrohrabschnitt 12 weist parallel zu der Längsachse 4 eine zweite Außenrohrabschnittslänge 76 auf. Die erste Außenrohrabschnittslänge 75 ist größer als die zweite Außenrohrabschnittslänge 76. Der zweite Außenrohrabschnitt 12 weist einen zweiten Außenrohraußendurchmesser 46 und einem zweiten Außenrohrinnendurchmesser 48 auf. Der erste Außenrohraußendurchmesser 45 ist kleiner als der zweite Außenrohraußendurchmesser 46. Der zweite Außenrohraußendurchmesser 46 entspricht (im Wesentlichen) einem in Fig. 1 gezeigten Gehäuseinnendurchmesser 77 des Armaturengehäuses 15. Der erste Außenrohrinnendurchmesser 47 ist kleiner als der zweite Außenrohrinnendurchmesser 48.

Das Innenrohr 3 weist einen ersten Innenrohrabschnitt 57 und einen zweiten Innenrohrabschnitt 60 auf. Der erste Innenrohrabschnitt 57 erstreckt sich von dem dritten längsseitigen Ende 53 des Innenrohrs 5 bis zu dem zweiten Innenrohrabschnitt 60. Der erste Innenrohrabschnitt 57 weist parallel zu der Längsachse 4 eine erste Innenrohrabschnittslänge 78 auf. Der erste Innenrohrabschnitt 57 weist einen ersten Innenrohraußendurchmesser 65 und einen ersten Innenrohrinnendurchmesser 67 auf. Der zweite Innenrohrabschnitt 60 erstreckt sich von dem ersten Innenrohrabschnitt 57 bis zu dem vierten längsseitigen Ende 54 des Innenrohrs 5. Der zweite Außenrohrabschnitt 60 weist parallel zu der Längsachse 4 eine zweite Innenrohrabschnittslänge 79 auf. Die erste Innenrohrabschnittslänge 78 ist kleiner als die zweite Innenrohrabschnittslänge 79. Der zweite Innenrohrabschnitt 60 weist einen zweiten Innenrohraußendurchmesser 66 und einen zweiten Innenrohrinnendurchmesser 68 auf. Der erste Innenrohraußendurchmesser 65 ist kleiner als der zweite Innenrohraußendurchmesser 66. Der erste Innenrohrinnendurchmesser 67 ist kleiner als der zweite Innenrohrinnendurchmesser 68.

Der erste Außenrohrinnendurchmesser 47 des ersten Außenrohrabschnitts 11 des Außenrohrs 3 ist größer als der zweite Innenrohraußendurchmesser 66 des zweiten Innenrohrabschnitts 60 des Innenrohrs 5, sodass der Warmwasserkanal 6 zwischen der ersten inneren Umfangsfläche 23 des Außenrohrs 3 und der zweiten äußeren Umfangsfläche 26 des Innenrohrs 5 ausgebildet ist bzw. sodass der Warmwasserkanal 6 durch die erste innere Umfangsfläche 23 des Außenrohrs 3 und die zweite äußere Umfangsfläche 26 des Innenrohrs 5 begrenzt wird. Der Warmwasserkanal 6 weist (orthogonal zu der Längsachse 4) eine Spaltbreite 56 auf.

Das Außenrohr 3 und das Innenrohr 5 erstrecken sich koaxial zu der Längsachse 4. Das Außenrohr 3 weist parallel zu der Längsachse 4 eine Außenrohrlänge 49 auf, die sich von dem ersten längsseitigen Ende 19 zu dem zweiten längsseitigen Ende 51 des Außenrohrs 3 erstreckt. Eine Gesamtlänge 52 der Kunststoffwasserführung 1 entspricht (parallel zu der Längsachse 4) der Außenrohrlänge 49 des Außenrohrs 3. Das Innenrohr 5 weist parallel zu der Längsachse 4 eine Innenrohrlänge 50 auf, die sich von dem dritten längsseitigen Ende 53 des Innenrohrs 5 zu dem vierten längsseitigen Ende 54 des Innenrohrs 5 erstreckt. Die Innenrohrlänge 50 des Innenrohrs 5 ist kleiner als die Außenrohrlänge 49 des Außenrohrs 3. Das dritte längsseitige Ende 53 des Innenrohrs 5 weist einen ersten Abstand 55 zu dem ersten längsseitigen Ende 19 des Außenrohrs 3 auf. Das vierte längsseitige Ende 54 des Innenrohrs 5 weist einen zweiten Abstand 80 zu dem zweiten längsseitigen Ende 51 des Außenrohrs 3 auf.

Die Kunststoffwasserführung 1 weist einen ersten Mischwasserabgang 7 und einen zweiten Mischwasserabgang 8 auf, von denen in Fig. 3 nur der zweite Mischwasserabgang 8 zu erkennen ist. Die Mischwasserabgänge 7, 8 erstrecken sich orthogonal zu der Längsachse 4 durch das Außenrohr 3 und das Innenrohr 5. Die Mischwasserabgänge 7, 8 sind rohrförmige ausgebildet und verbinden das Außenrohr 3 mit dem Innenrohr 5, sodass das Innenrohr 5 in dem Außenrohr 3 befestigt ist. Die Kunststoffwasserführung 1 ist einstückig ausgebildet.

Fig. 4 zeigt die Mischarmatur 2 in einem Querschnitt entlang der in der Fig. 2 gezeigten Schnittlinie IV-IV. Zu erkennen ist in Fig. 4, dass der erste Mischwasserabgang 7 und der zweite Mischwasserabgang 8 der Kunststoffwasserführung 1 parallel zu der Längsachse 4 in einer gemeinsamen Ebene 10 liegen (vgl. Fig. 2). Der erste Mischwasserabgang 7 und der zweite Mischwasserabgang 8 sind um die Längsachse 4 mit einem Winkel 9 versetzt zueinander ausgebildet. Das Innenrohr 5 weist an seiner zweiten äußeren Umfangsfläche 26 einen ersten ringförmigen Ansatz 61 auf, der sich von der zweiten äußeren Umfangsfläche 26 des Innenrohrs 5 orthogonal zu der Längsachse 4 zu der ersten inneren Umfangsfläche 23 des Außenrohrs 3 erstreckt und der den ersten Mischwasserabgang 7 teilweise bildet. Das Innenrohr 5 weist an seiner zweiten äußeren Umfangsfläche 26 einen zweiten ringförmigen Ansatz 62 auf, der sich von der zweiten äußeren Umfangsfläche 26 des Innenrohrs 5 orthogonal zu der Längsachse 4 zu der ersten inneren Umfangsfläche 23 des Außenrohrs 3 erstreckt und der den zweiten Mischwasserabgang 8 teilweise bildet (vgl. Fig. 3). Der Warmwasserkanal 6 verläuft parallel zur Längsachse 4.

In den ersten Mischwasserabgang 7 ist ein erstes Kunststoffrohr 58 gesteckt, mit dem das Mischwasser dem ersten Mischwasserauslauf 63 der Mischarmatur 2 bzw. des Armaturengehäuses 15 zuführbar ist. In den zweiten Mischwasserabgang 8 ist ein zweites Kunststoffrohr 59 gesteckt, mit dem das Mischwasser dem zweiten Mischwasserablauf 64 der Mischarmatur 2 bzw. des Armaturengehäuses 15 zuführbar ist. Der erste Mischwasserablauf 63 und der zweite Mischwasserablauf 64 liegen sich gegenüber. An den ersten Mischwasserablauf 63 ist beispielsweise ein hier nicht gezeigter Verbindungsschlauch anschließbar, über den das Mischwasser einer hier ebenfalls nicht gezeigten Handbrause zuführbar ist. An den zweiten Mischwasserablauf 64 ist beispielsweise ein hier nicht gezeigtes Verbindungsrohr anschließbar, über das das Mischwasser einer hier ebenfalls nicht gezeigten Kopfbrause zuführbar ist.

Der erste Mischwasserabgang 7 weist einen ersten Durchmesser 13 und der zweite Mischwasserabgang 8 einen zweiten Durchmesser 14 auf. Der erste Mischwasserabgang 7 bzw. der erste ringförmige Ansatz 61 und der zweite Mischwasserabgang 8 bzw. der zweite ringförmige Ansatz 62 weisen eine Wandstärke 69 auf.

Durch die vorliegende Erfindung ist das Armaturengehäuse 15 mit einem geringen Außendurchmesser herstellbar.

### Bezugszeichenliste

- 1: Kunststoffwasserführung
- 2: Mischarmatur
- 3: Außenrohr
- 4: Längsachse
- 5: Innenrohr
- 6: Warmwasserkanal
- 7: erster Mischwasserabgang
- 8: zweiter Mischwasserabgang
- 9: Winkel
- 10: Ebene
- 11: erster Außenrohrabschnitt
- 12: zweiter Außenrohrabschnitt
- 13: erster Durchmesser
- 14: zweiter Durchmesser
- 15: Armaturengehäuse
- 16: Warmwasserzulauf
- 17: Kaltwasserzulauf
- 18: Mischventil
- 19: erstes längsseitiges Ende
- 20: Ventil
- 21: Kaltwasserkanal
- 22: Gehäuselängsachse
- 23: erste innere Umfangsfläche
- 24: zweite innere Umfangsfläche
- 25: erste äußere Umfangsfläche
- 26: zweite äußere Umfangsfläche
- 27: Kartuschengehäuse
- 28: Kartuschenkopfstück
- 29: erster Einlass
- 30: zweiter Einlass
- 31: Mischkammer
- 32: Mischwasserauslass
- 33: Mischwasserkanal
- 34: Stellelement
- 35: Betätigungsgriff
- 36: Reguliermutter
- 37: Überlasteinheit
- 38: erste Drehachse
- 39: Federhülse
- 40: axiale Richtung
- 41: Regelelement
- 42: Regelschieber
- 43: erster Regelspalt
- 44: zweiter Regelspalt
- 45: erster Außenrohraußendurchmesser
- 46: zweiter Außenrohraußendurchmesser
- 47: erster Außenrohrinnendurchmesser
- 48: zweiter Außenrohrinnendurchmesser
- 49: Außenrohrlänge
- 50: Innenrohrlänge
- 51: zweites längsseitiges Ende
- 52: Gesamtlänge
- 53: drittes längsseitiges Ende
- 54: vierte längsseitiges Ende
- 55: Abstand
- 56: Spaltbreite
- 57: erster Innenrohrabschnitt
- 58: erstes Kunststoffrohr
- 59: zweites Kunststoffrohr
- 60: zweiter Innenrohrabschnitt
- 61: erste ringförmige Ansatz
- 62: zweite ringförmige Ansatz
- 63: erster Mischwasserablauf
- 64: zweiter Mischwasserablauf
- 65: erster Innenrohraußendurchmesser
- 66: zweiter Innenrohraußendurchmesser
- 67: erster Innenrohrinnendurchmesser
- 68: zweiter Innenrohrinnendurchmesser
- 69: Wandstärke
- 70: Ventilbetätigungsgriff
- 71: zweite Drehachse
- 72: Kunststoffrohr
- 73: Kunststoffrohraußenfläche
- 74: Verbindungskanal
- 75: erste Außenrohrabschnittslänge
- 76: zweite Außenrohrabschnittslänge
- 77: Gehäuseinnendurchmesser
- 78: erste Innenrohrabschnittslänge
- 79: zweite Innenrohrabschnittslänge
- 80: zweiter Abstand

## Patentansprüche

1. Kunststoffwasserführung (1) für eine Mischarmatur (2), zumindest aufweisend:
- ein Außenrohr (3), das sich entlang einer Längsachse (4) erstreckt;
- ein Innenrohr (5), das sich entlang der Längsachse (4) erstreckt und zumindest teilweise in dem Außenrohr (3) angeordnet ist, sodass zwischen dem Innenrohr (5) und dem Außenrohr (3) zumindest ein Warmwasserkanal (6) ausgebildet ist; und
- zumindest einen Mischwasserabgang (7, 8), der sich durch das Innenrohr (5) und das Außenrohr (3) erstreckt;
wobei die Kunststoffwasserführung (1) einstückig ausgebildet ist.

2. Kunststoffwasserführung (1) nach Patentanspruch 1, wobei das Außenrohr (3) einen ersten Außenrohrabschnitt (11) mit einem ersten Außenrohraußendurchmesser (45) und einen zweiten Außenrohrabschnitt (12) mit einem zweiten Außenrohraußendurchmesser (46) aufweist und wobei der erste Außenrohraußendurchmesser (45) kleiner als der zweite Außenrohraußendurchmesser (46) ist.

3. Kunststoffwasserführung (1) nach einem der vorhergehenden Patentansprüche, wobei das Außenrohr (3) einen ersten Außenrohrabschnitt (11) mit einem ersten Außenrohrinnendurchmesser (47) und einen zweiten Außenrohrabschnitt (12) mit einem zweiten Außenrohrinnendurchmesser (48) aufweist und wobei der erste Außenrohrinnendurchmesser (47) kleiner als der zweite Außenrohrinnendurchmesser (48) ist.

4. Kunststoffwasserführung (1) nach einem der vorhergehenden Patentansprüche, wobei das Innenrohr (5) einen ersten Innenrohrabschnitt (57) mit einem ersten Innenrohraußendurchmesser (65) und einen zweiten Innenrohrabschnitt (60) mit einem zweiten Innenrohraußendurchmesser (66) aufweist, wobei der erste Innenrohraußendurchmesser (65) kleiner als der zweite Innenrohraußendurchmesser (66) ist.

5. Kunststoffwasserführung (1) nach einem der vorhergehenden Patentansprüche, wobei das Innenrohr (5) einen ersten Innenrohrabschnitt (57) mit einem ersten Innenrohrinnendurchmesser (67) und einen zweiten Innenrohrabschnitt (60) mit einem zweiten Innenrohrinnendurchmesser (68) aufweist, wobei der erste Innenrohrinnendurchmesser (67) kleiner als der zweite Innenrohrinnendurchmesser (68) ist.

6. Kunststoffwasserführung (1) nach einem der vorhergehenden Patentansprüche, wobei der zumindest eine Mischwasserabgang (7, 8) orthogonal zu der Längsachse (4) verläuft.

7. Kunststoffwasserführung (1) nach einem der vorhergehenden Patentansprüche, wobei der zumindest eine Mischwasserabgang (7, 8) eine Wandstärke (69) von maximal 5 mm aufweist.

8. Kunststoffwasserführung (1) nach einem der vorhergehenden Patentansprüche, aufweisend:
- einen ersten Mischwasserabgang (7), der sich durch das Innenrohr (5) und das Außenrohr (3) erstreckt; und
- einen zweiten Mischwasserabgang (8), der sich durch das Innenrohr (5) und das Außenrohr (3) erstreckt, wobei der erste Mischwasserabgang (7) und der zweite Mischwasserabgang (8) um die Längsachse (4) mit einem Winkel (9) von 100° bis 140° versetzt zueinander ausgebildet sind.

9. Mischarmatur (2), zumindest aufweisend:
- ein Armaturengehäuse (15) mit einem Warmwasserzulauf (16) für Warmwasser und einem Kaltwasserzulauf (17) für Kaltwasser;
- ein Mischventil (18) zum Mischen des Warmwassers und des Kaltwassers zu einem Mischwasser; und
- eine Kunststoffwasserführung (1) nach einem der vorhergehenden Patentansprüche, wobei das Warmwasser dem Mischventil (18) durch die Kunststoffwasserführung (1) ohne Kontakt zu dem Armaturengehäuse (15) zuführbar ist.

10. Verfahren zur Herstellung einer Kunststoffwasserführung (1) nach einem der Patentansprüche 1 bis 8, bei dem die Kunststoffwasserführung (1) durch Spritzgießen hergestellt wird.
